# EUROPEAN PATENT SPECIFICATION

(11) **EP 2 224 770 B1**
(45) Date of publication and mention of the grant of the patent: **22.02.2012**
(21) Application number: 09290135.4
(22) Date of filing: 25.02.2009
(51) Int. Cl.: H04W 36/14

(54) **Method and equipment for dynamically updating neighboring cell lists in heterogenous networks**
Verfahren und Gerät zur dynamischen Aktualisierung von Nachbarzelllisten in heterogenen Netzwerken
Procédé et équipement pour actualiser dynamiquement des listes de cellules voisines dans des réseaux hétérogènes

(43) Date of publication of application: 01.09.2010
(73) Proprietor: Alcatel Lucent, 75007 Paris (FR)
(72) Inventor: Nguyen, Van Minh, 94270 Le Kremlin Bicêtre (FR); El Mghazli, Yacine, 94110 Arcueil (FR)
(74) Representative: Croonenbroek, Thomas Jakob

(56) References cited:
- EP-A- 0 986 279
- WO-A-2009/019319
- US-A1- 2005 266 845
- US-A1- 2009 005 030
- MITSUBISHI ELECTRIC: "Self-Optimised Neighbourhood Relations" 3GPP DRAFT; R3-071591 (SELF-OPTIMIZED NEIGHBOURHOOD RELATION), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20070820, 15 August 2007 (2007-08-15), XP050162404
- ERICSSON ET AL: "Communication protocol between the UE and the ANDSF" 3GPP DRAFT; C1-083239, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Budapest, Hungary; 20080818, 18 August 2008 (2008-08-18), XP050308461 [retrieved on 2008-08-11]
- PANASONIC: "Access Network Discovery and Selection" 3GPP DRAFT; C1-072285, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Kobe, Japan; 20071008, 1 October 2007 (2007-10-01), XP050026437

## Description

### BACKGROUND OF THE INVENTION

The present invention relates to the field of wireless communication networks and more specifically to the management of neighboring cell lists in heterogeneous wireless communication networks.

An heterogeneous network corresponds to a network using different technologies to provide connection to the terminals.

A wireless communication network comprises multiple attachment points providing radio connection to the user terminals. Each attachment point covers a defined area also called cell. Thus, terminals within a cell are connected to the corresponding attachment point. When the terminal moves from one cell to another, a handover process allows to transfer the attachment of the terminal from one attachment point to another corresponding to a new cell.

However and especially in an heterogeneous network, several cells may overlap. Moreover, the evolution of the network may lead to improved coverages, creation of new cells or suppression of cells.

Therefore, a radio scanning needs to be achieved by the terminal in order to determine effectively the neighboring attachment point providing the best radio connection quality. Such scanning process can be eased by knowing in advance the existing neighboring attachment points thus allowing to reduce the scanning time and, as a consequence, the time required to produce the handover.

An idea is therefore to create for each attachment point a neighboring cell list and transmit such list to the terminals connected to said attachment point.

Nevertheless, the establishment and even more the updating of such list is tedious.

Besides, in an heterogeneous network, depending on the type of technology used, the normalized type of signal quality measurements differ from one technology to the other such that a global comparison between the connection qualities of the different technologies comprised in the network is not obvious.

Document EP 0 986 279 A1 discloses dynamically updating neighboring cell lists in a macro/micro cell radio network based on signal quality measurements provided by a mobile terminal.

### SUMMARY OF THE INVENTION

It is therefore an object of the present invention to overcome the above cited drawbacks of the state of the art and provide a method for dynamically updating neighboring cell lists in heterogeneous networks wherein said method comprises the following steps:
- transmitting to at least one terminal a neighboring cell list comprising candidate neighboring attachment points identifiers, the corresponding frequency channels and the corresponding expected radio signal qualities to the cell to which said at least one terminal is connected,
   if a handover process is required for said at least one terminal,
- scanning the surroundings of said terminal for measuring radio signal quality provided by the neighboring attachment points of the heterogeneous network, said scanning being achieved in priority along the channels corresponding to the attachment points of the neighboring cell list,
- comparing the measured radio signal quality of the neighboring attachment points with the data of the neighboring cell list,
   if at least one radio signal quality measurement is different from the expected radio signal quality of the neighboring cell list and matches at least one predetermined condition,
- transmitting said at least one radio signal quality measurement, its corresponding neighboring attachment point identifier and its corresponding frequency channel to the core network,
- analysing statistically the at least one received radio signal quality measurement and the former available measurements corresponding to the cell to which said at least one terminal is connected,
- updating the neighboring cell list based on said analysis.

According to another embodiment, the step of analysing statistically the at least one received radio signal quality measurement and the former available measurements corresponding to the cell to which said at least one terminal is connected comprises the following steps:
- applying a harmonizing filter to said at least one radio signal quality measurement and to the former radio signal quality measurements in function of their type in order to provide a comparison basis between the different radio signal quality measurements existing in the heterogeneous network,
- selecting, in function of predetermined criteria, the attachment points to be put in the list.

According to a further embodiment, said predetermined criteria refer to at least one of or a combination of the following criteria:
- a signal quality level,
- a number of measurements,
- a cell coverage,
- a data throughput feature,
- a list size limit,
- a technical criterion,
- an administrative criterion.

According to an additional embodiment, the technical criterion refers to an operator or user policy so that attachment points may be preferred based on their technology.

According to another embodiment, the administrative criterion refers to an operator or user policy so that attachment points may be preferred based on their operator.

According to a further embodiment, said former available measurements comprise measurements sent by terminals and handover data collected by the attachment points.

According to an additional embodiment, said predetermined condition refers to the measured radio signal quality level with respect to a predetermined signal quality threshold.

According to another embodiment, said predetermined condition refers to a condition on the difference between the measured radio signal quality level and the corresponding radio signal quality level of the list.

According to a an additional embodiment, said radio signal quality measurements are transmitted from the at least one terminal to the core network according to a 802.21 Media Independant Handover (MIH) protocol.

According to a further embodiment, the analysis of the received radio signal quality measurements and the update of the neighboring cell list are achieved in a third Generation Partnership Project (3GPP) Access Network Discovery and Selection Function (ANDSF) server.

The present invention also refers to a terminal comprising means to connect to different types of attachment points of an heterogeneous network wherein it also comprises means for:
- receiving a neighboring cell list comprising candidate neighboring attachment points identifications, the corresponding frequency channel and the corresponding expected radio signal quality,
- scanning the surroundings for measuring radio signal quality provided by the neighboring attachment points of the heterogeneous network, said scanning being achieved in priority along the channels corresponding to the attachment points of the neighboring cell list,

- comparing the measured radio signal quality of the neighboring attachment points with the data of the neighboring cell list,
- transmitting at least one radio signal quality measurement, its corresponding neighboring attachment point identifier and its corresponding frequency channel to the core network in the case one radio signal quality measurement is different from expeded radio signal quality of the neighboring all list and matches at least one predetermined condition.

### BRIEF DESCRIPTION OF THE DRAWINGS

FIG.1 is a synoptic diagram representing the different steps of the present invention;
FIG.2 is a diagram of an example of topology of an heterogeneous network;
FIG.3 is a chart of an example of a part of a global heterogeneous neighboring cell list (H-NCL) according to the present invention;
FIG.4 is a chart of an example of an heterogeneous neighboring cell list (H-NCL) corresponding to a cell of the network;
FIG.5 is a diagram of a possible network structure.
FIG.6 is a chart of an example of an heterogeneous neighboring cell list (H-NCL) corresponding to a cell of the network;;

### DETAILED DESCRIPTION OF THE INVENTION

As used herein, the term "heterogeneous network" refers to a network comprising different types of structure in order to provide radio connection, for example WIMAX, 3G and LTE structures;

As used herein, the term "LTE" refers to the acronym Long Term Evolution;
As used herein, the term "WIMAX" refers to the acronym Worldwide Interoperability for Microwave Access;
As used herein, the term "3G" refers to the acronym third generation;
As used herein, the term "3GPP" refers to the acronym third generation Partnership Project;
As used herein, the term "ANDSF" refers to the acronym Access Network Discovery and Selection Function;
As used herein, the term "NCL" refers to the acronym Neighboring Cell List;
As used herein, the term "H-NCL" refers to the acronym Heterogeneous Neighboring Cell List;
As used herein, the term "MIH" refers to the acronym Media independent Handover;
As used herein, the term "AP" refers to the acronym Attachment Point;

The present invention refers to a dynamic updating of a neighboring cell list in an heterogeneous network.

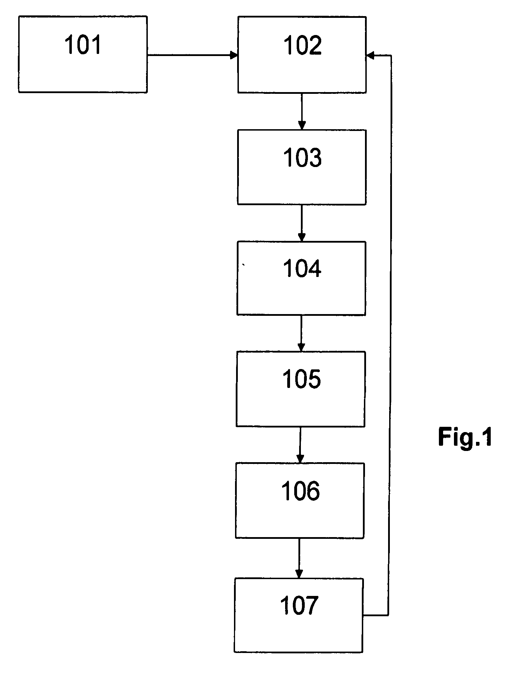

Fig.1 represents the different steps of the method according to the present invention.

The first step 101 corresponds to the creation and the configuration of an heterogeneous neighboring cell list (H-NCL). Said list being divided in as many sub-lists as the number of cells of the network.

The sub-lists are then filled in with the neighboring cells based on the available statistical handover data and/or from former measurements. Said creation and configuration of the H-NCL can be achieved, for example, in the core network, in a 3GPP Access Network Discovery and Selection Function (ANDSF) server.

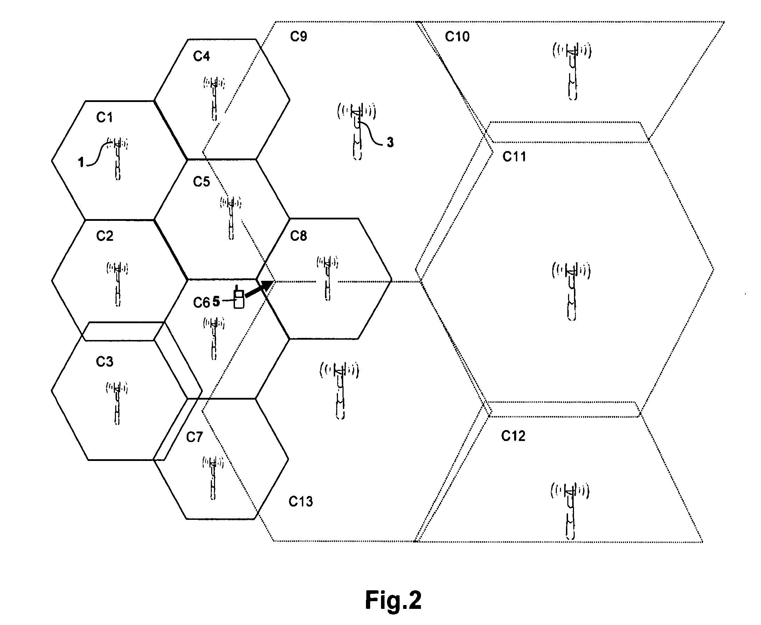

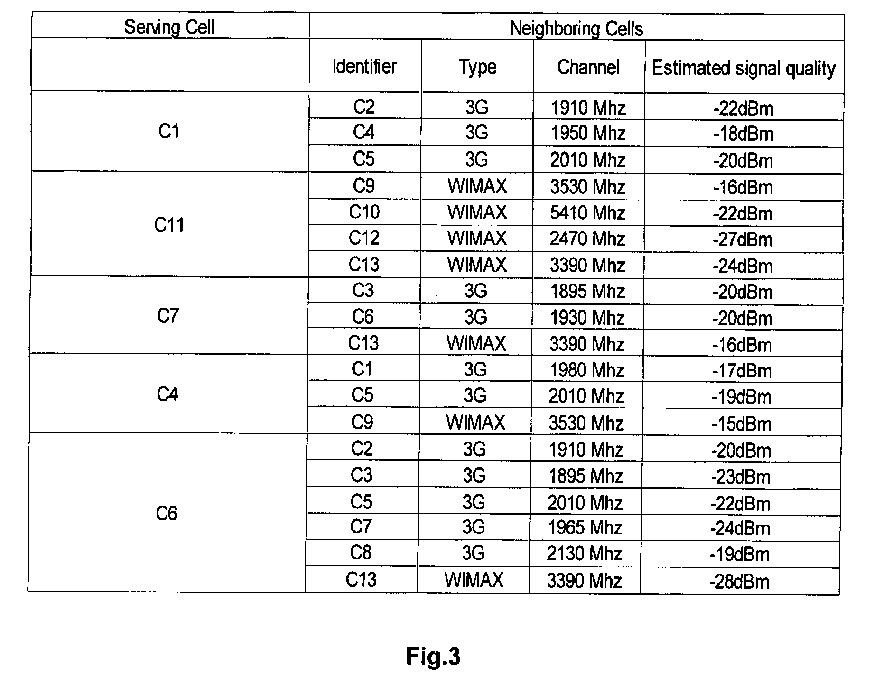

If no data or only partial data are available, the sub-list can be partially filled in. Fig.3 represents an example of heterogeneous neighboring cell list corresponding to a part of the network described in Fig.2.

The second step 102 refers to the transmission of said H-NCL to the terminals of the network. Actually, only the sub-list part of the H-NCL is transmitted to the corresponding attachment points (APs). For example, with the H-NCL of Fig.3, only the portion corresponding to the serving cell C1 is transmitted to the AP corresponding to cell C1. Then, the attachment point transmit said H-NCL to the terminals that are connected to it. Such transmission can be achieved just after the connection of a terminal to said AP.

The third step 103 refers to the scanning of the surroundings. Such scanning is achieved by the terminal when a handover is required. In general, the feature triggering a handover process corresponds to a signal power or signal quality being lower than a predefined threshold. When the handover process is launched, the terminal has to scan the surroundings to effectively measure signal power levels received from the different APs corresponding to the neighboring cells. Each AP emits at a given frequency band also called channel. Said channels are comprised within a band defined by the norm corresponding to the technology. In an heterogeneous network, the scanning process has to cover the frequency bands corresponding to all the normalized bands of the different technologies which may require a large amount of time and leads to handover delays. Thus, the idea is to use the data provided in the H-NCL to focus in priority the scanning on the registered frequency bands.

The following step 104 refers to the comparison of the signal quality values with the H-NCL· values and the selection of relevant measurements. Indeed, H-NCL data are based on statistical measurements achieved previously and do not necessary correspond to the situation of the terminal at the handover instant. Therefore the choice of the new cell selected for the connection is based on the measurements of the scanning. Besides, if the measurements are different than the registered data, for example if the difference in signal quality is higher than a given threshold, the measurement can be selected to be reported to the core network. Indeed, if the signal quality is much lower than the expected value, this can be due to a technical problem that can be analysed by the core network or due to a modification in the network (AP removal/modification). Moreover, if new neighboring cells having the required features are discovered, the corresponding measurements are also reported to the core network. It has to be noted that the measurements selection described above is necessary in order to limit the amount and the size of signalling messages in the network.

Once the selection is achieved, the selected measurements are transmitted to the core network (step 105) through the serving AP.

Then, the transmitted measurements are processed and analysed in the core network (step 106). During said processing, harmonizing filters are applied on the signal quality measurements in order to provide a comparison basis for the different types of measurements. Indeed, as an heterogeneous network gather different technologies having different normalized procedures, the signal quality parameters used are not necessarily the same from one type to the other. For example, the signal quality parameter can be a signal to interference plus noise ratio (SINR) or a carrier to interference plus noise ratio (CINR) as well as a received signal strength indication (RSSI) or any suitable parameter. Thus, in order to compare said signals, harmonizing filters are applied to convert the different types of parameter into a common base. Once the measurements are harmonized, it is possible to compare the received measurements with the former ones and to determine the attachment points offering the highest signal qualities.

The next step 107 refers to the updating of the H-NCL. The attachment point selection may vary depending on the configuration defined by the network. Indeed, the selection may be based only on the signal quality data but may also take into account other features. For example, the network policy may favour the selection of attachment point belonging to a defined operator or using a given technology. The terminal user may also decide to be connected in priority or exclusively to a certain type of sub-network. The number of reported measurements, the size of the covering cell or the offered throughput as well as any performance parameters may also influence the selection. Then, the updated H-NCL can be transmitted to the different attachment points and consequently to the terminals (step 102).

Thus, the updating of the H-NCL is a permanent and dynamic process which allows to optimize the handover process in heterogeneous networks while limiting the volume of exchanged signalling messages through said networks.

In order to better understand the present invention, a possible embodiment will now be described based on the network represented in Fig.2, wherein two different technologies coexist. Solid lines represent the 3G type cells whereas the dashed lines represent WIMAX cells. Each 3G type cell comprises a 3G type attachment point (AP) 1 and each WIMAX type cell comprises a WIMAX type AP 3 also called base station. The cell geometry represents the approximate coverage area of the corresponding attachment point.

Thus, the cells may overlap partially or even totally in the case of an heterogeneous network. The consequence of such overlapping is the difficulty for a terminal to detect the different possible connections and to choose the optimal solution among the different available possibilities.

For example, in the case of the terminal 5 of Fig.2 which is located in cell C6 (and therefore connected to the corresponding attachment point) and moving in the direction described by the arrow.

As said terminal approaches the edge of cell C6, the quality of the radio connection will drop and become inferior than a threshold value. Such situation will launch a handover process in order for the terminal 5 to switch its connection to another attachment point providing a better radio connection quality.

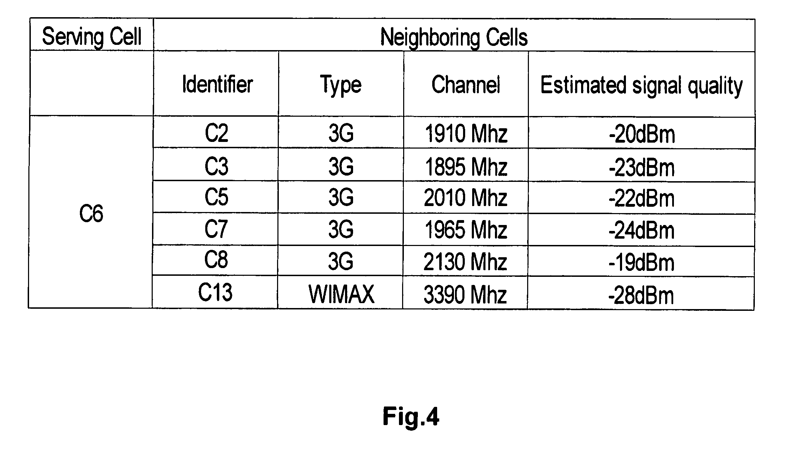

In order to select the optimal cell for the handover, the terminal 5 has to scan the surroundings. According to the present invention, the terminal 5 uses the H-NCL previously provided by its serving attachment point (AP6 corresponding to cell C6) and represented in Fig.4. Based on the data of said H-NCL, the terminal will start to scan the provided frequency bands (around 1895 Mhz, 2010 Mhz, 1965 Mhz, 2130 Mhz and 3390Mhz) to check the quality of signal of the corresponding cells.

The system has the capacity to detect new cells, which were not originally in the H-NCL. For example, in the present situation, new cell C9 is detected by the terminal with a good signal quality.

Based on the scanning measurements, the terminal 5 will select the cell offering the best signal quality, C13 for example, and will send a request to the attachment point of its serving cell C6 to transfer the connection (handover process) to the attachment point of cell C13. As the signal quality of the detected cell C9 is good enough, the terminal 5 will also send a report to the core network comprising the measurement of cell C9.

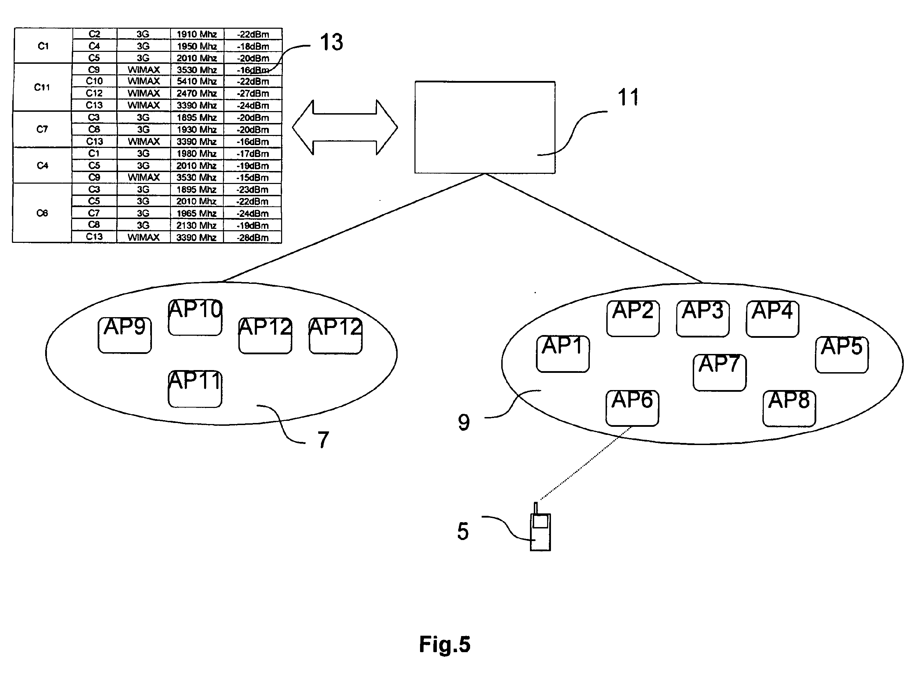

According to a possible embodiment, said report can be transmitted to the core network using a 802.21 media independent handover (MIH) protocol. Fig.5 represents a possible network structure with the WIMAX part 7 and the 3G part 9 of the network. The terminal 5 is connected to the attachment point AP6 corresponding to cell C6. The report is first transmitted to the serving attachment point AP6 and then transferred to the core network to a network server such as a 3GPP Access Network Discovery and Selection Function (ANDSF) 11 which processes the reported data and updates the H-NCL 13.

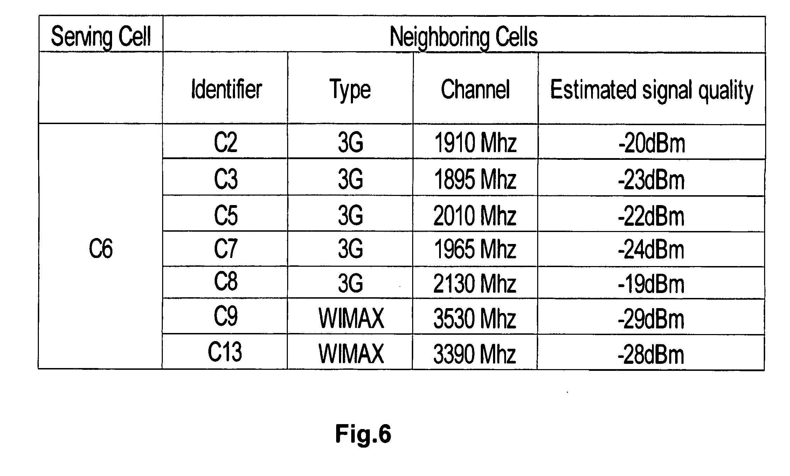

In our present example, the updating of the H-NCL 13 may lead to the addition of cell C9 in the H-NCL corresponding to cell C6 as described in Fig.6. Nevertheless, as described previously, it has to be noted that many measurements provided by the terminals of the network are taken into account to update the H-NCL 13 and that the selection of the cells added to the H-NCL 13 is based on many criteria. Thus, in practise, the addition of a new cell results from a plurality of reports concerning said cell. When the update is achieved by the 3GPP ANDSF 11, the new version of the H-NCL 13 is sent back to the corresponding attachment point AP6 such that when a terminal gets connected to cell C6, said terminal receives an updated H-NCL 13 in order to ease its handover to a neighboring cell.

As a conclusion, the present invention proposes a method that allows to dynamically manage and update a neighboring cell list using the measurements achieved during the scanning of a handover process. Moreover, the method may be applied to heterogeneous networks thanks to the use of harmonizing filters and allows to limit the amount and the size of signalling messages being exchanged through the network.

## Claims

1. Method for dynamically updating neighboring cell lists (13) in heterogeneous networks **characterized in that** said method comprises the following steps:
- transmitting (102) to at least one terminal (5) a neighboring cell list (13) comprising candidate neighboring attachment points identifiers, the corresponding frequency channels and the corresponding expected radio signal qualities, to the cell to which said at least one terminal is connected,
if a handover process is required for said at least one terminal (5),
- scanning (103) the surroundings of said terminal (5) for measuring radio signal quality provided by the neighboring attachment points of the heterogeneous network, said scanning being achieved in priority along the channels corresponding to the attachment points of the neighboring cell list (13),
- comparing (104) the measured radio signal quality of the neighboring attachment points with the data of the neighboring cell list (13),
if at least one radio signal quality measurement is different from the expected radio signal quality of the neighboring cell list (13) and matches at least one predetermined condition,
- transmitting (105) said at least one radio signal quality measurement, its corresponding neighboring attachment point identifier and its corresponding frequency channel to the core network,
- analysing (106) statistically the at least one received radio signal quality measurement and the former available measurements corresponding to the cell to which said at least one terminal (5) is connected,
- updating (107) the neighboring cell list (13) based on said analysis.

2. Method for dynamically updating neighboring cell lists in heterogeneous networks according to claim 1 wherein the step of analysing (106) statistically the at least one received radio signal quality measurement and the former available measurements corresponding to the cell to which said at least one terminal is connected comprises the following steps:
- applying a harmonizing filter to said at least one radio signal quality measurement and to the former radio signal quality measurements in function of their type in order to provide a comparison basis between the different radio signal quality measurements existing in the heterogeneous network,
- selecting, in function of predetermined criteria, the attachment points to be put in the list.

3. Method for dynamically updating neighboring cell lists (13) in heterogeneous networks according to claim 2 wherein said predetermined criteria refer to at least one of or a combination of the following criteria:
- a signal quality level,
- a number of measurements,
- a cell coverage,
- a data throughput feature,
- a list size limit,
- a technical criterion,
- an administrative criterion.

4. Method for dynamically updating neighboring cell lists (13) in heterogeneous networks according to claim 3 wherein the technical criterion refers to an operator or user policy so that attachment points may be preferred based on their technology.

5. Method for dynamically updating neighboring cell lists (13) in heterogeneous networks according to claim 4 wherein the administrative criterion refers to an operator or user policy so that attachment points may be preferred based on their operator.

6. Method for dynamically updating neighboring cell lists (13) in heterogeneous networks according to one of the previous claims wherein said former available measurements comprise measurements sent by terminals and handover data collected by the attachment points.

7. Method for dynamically updating neighboring cell lists (13) in heterogeneous networks according to one of the previous claims wherein said predetermined condition refers to the measured radio signal quality level with respect to a predetermined signal quality threshold.

8. Method for dynamically updating neighboring cell lists (13) in heterogeneous networks according to one of the previous claims wherein said predetermined condition refers to a condition on the difference between the measured radio signal quality level and the corresponding radio signal quality level of the list.

9. Method for dynamically updating neighboring cell lists (13) in heterogeneous networks according to one of the previous claims wherein said radio signal quality measurements are transmitted from the at least one terminal (5) to the core network according to a 802.21 Media Independant Handover (MIH) protocol.

10. Method for dynamically updating neighboring cell lists (13) in heterogeneous networks according to one of the previous claims wherein the analysis of the received radio signal quality measurements and the update of the neighboring cell list are achieved in a third Generation Partnership Project (3GPP) Access Network Discovery and Selection Function (ANDSF) server.

11. Terminal (5) comprising means to connect to different types of attachment points of an heterogeneous network **characterized in that** it also comprises means for:
- receiving a neighboring cell list (13) comprising candidate neighboring attachment points identifications, the corresponding frequency channel and the corresponding expected radio signal quality,
- scanning the surroundings for measuring radio signal quality provided by the neighboring attachment points of the heterogeneous network, said scanning being achieved in priority along the channels corresponding to the attachment points of the neighboring cell list (13),
- comparing the measured radio signal quality of the neighboring attachment points with the data of the neighboring cell list (13),
- transmitting at least one radio signal quality measurement, its corresponding neighboring attachment point identifier and its corresponding frequency channel to the core network in case at least one radio signal quality measurement is different from the expected radio signal quality of the neighboring cell list (13) and matches at least one predetermined condition.

## Patentansprüche

1. Verfahren zur dynamischen Aktualisierung von Nachbarzellenlisten (13) in heterogenen Netzwerken, **dadurch gekennzeichnet, dass** das besagte Verfahren die folgenden Schritte umfasst:
- Übertragen (102), an mindestens ein Endgerät (5), einer Nachbarzellenliste (13), welche Kennungen von benachbarten Anknüpfungspunktkandidaten, die entsprechenden Frequenzkanäle und die entsprechenden voraussichtlichen Funksignalqualitäten enthält, an die Zelle, mit welcher das mindestens eine Endgerät verbunden ist,
wenn für das besagte mindestens eine Endgerät (5) ein Handover-Vorgang gefordert wird,
- Scannen (103) der Umgebung des besagten Endgeräts (5) zum Messen der von den benachbarten Anknüpfungspunkten des heterogenen Netzwerks bereitgestellten Funksignalqualität, wobei das besagte Scannen vorrangig entlang den den Anknüpfungspunkten der Nachbarzellenliste (13) entsprechenden Kanälen durchgeführt wird,
- Vergleichen (104) der gemessenen Funksignalqualität der benachbarten Anknüpfungspunkte mit den Daten der Nachbarzellenliste (13),
wenn mindestens eine Funksignalqualitätsmessung von der voraussichtlichen Funksignalqualität der Nachbarzellenliste (13) abweicht und mindestens einer vorbestimmten Bedingung entspricht,
- Übertragen (105) der besagten mindestens einen Funksignalqualitätsmessung, der Kennung ihres entsprechenden benachbarten Anknüpfungspunktes und ihres entsprechenden Frequenzkanals an das Kernnetzwerk,
- statistisches Analysieren (106) der mindestens einen empfangenen Funksignalqualitätsmessung und der verfügbaren vorherigen Messungen, die der Zelle, mit welcher das besagte mindestens eine Endgerät (5) verbunden ist, entspricht,
- Aktualisieren (107) der Nachbarzellenliste (13) auf der Basis der besagten Analyse.

2. Verfahren zur dynamischen Aktualisierung von Nachbarzellenlisten in heterogenen Netzwerken nach Anspruch 1, wobei der Schritt des statistischen Analysierens (106) der mindestens einen empfangenen Funksignalqualitätsmessung und der verfügbaren vorherigen Messungen, die der Zelle, mit welcher das besagte mindestens eine Endgerät verbunden ist, entsprechen, die folgenden Schritte umfasst:
- Anwenden eines Harmonisierungsfilters auf die besagte mindestens eine Funksignalqualitätsmessung und auf die vorherigen Funksignalqualitätsmessungen in Abhängigkeit von deren Typ, um eine Vergleichsbasis zwischen den verschiedenen in dem heterogenen Netzwerk bestehenden Funksignalqualitätsmessungen bereitzustellen,
- Auswählen, in Abhängigkeit von vorbestimmten Kriterien, der in die Liste aufzunehmenden Anknüpfungspunkte.

3. Verfahren zur dynamischen Aktualisierung von Nachbarzellenlisten (13) in heterogenen Netzwerken nach Anspruch 2, wobei sich die besagten vorbestimmten Kriterien auf mindestens eines der nachfolgenden Kriterien oder auf eine Kombination dieser beziehen:
- Ein Signalqualitätspegel,
- eine Anzahl der Messungen,
- eine Zellenabdeckung,
- ein Datendurchsatzmerkmal,
- eine Listengrößengrenze,
- ein technisches Kriterium,
- ein Verwaltungskriterium.

4. Verfahren zur dynamischen Aktualisierung von Nachbarzellenlisten (13) in heterogenen Netzwerken nach Anspruch 3, wobei sich das technische Kriterium auf eine Betreiber- oder Benutzerrichtlinie bezieht, so dass Anknüpfungspunkte auf der Basis deren Technologie bevorzugt werden können.

5. Verfahren zur dynamischen Aktualisierung von Nachbarzellenlisten (13) in heterogenen Netzwerken nach Anspruch 4, wobei sich das Verwaltungskriterium auf eine Betreiber- oder Benutzerrichtlinie bezieht, so dass Anknüpfungspunkte auf der Basis ihres Betreibers bevorzugt werden können.

6. Verfahren zur dynamischen Aktualisierung von Nachbarzellenlisten (13) in heterogenen Netzwerken nach einem der vorstehenden Ansprüche, wobei die besagten verfügbaren vorherigen Messungen von Endgeräten gesendete Messungen und von den Anknüpfungspunkten erfasste Handover-Daten umfassen.

7. Verfahren zur dynamischen Aktualisierung von Nachbarzellenlisten (13) in heterogenen Netzwerken nach einem der vorstehenden Ansprüche, wobei sich die besagte vorbestimmte Bedingung auf den gemessenen Funksignalqualitätspegel in Bezug auf einen vorbestimmten Signalqualitätsgrenzwert bezieht.

8. Verfahren zur dynamischen Aktualisierung von Nachbarzellenlisten (13) in heterogenen Netzwerken nach einem der vorstehenden Ansprüche, wobei sich die besagte vorbestimmte Bedingung auf eine Bedingung in Bezug auf die Differenz zwischen dem gemessenen Funksignalqualitätspegel und dem entsprechenden Funksignalqualitätspegel der Liste bezieht.

9. Verfahren zur dynamischen Aktualisierung von Nachbarzellenlisten (13) in heterogenen Netzwerken nach einem der vorstehenden Ansprüche, wobei die besagten Funksignalqualitätsmessungen gemäß einem medienunabhängigen Handover-Protokoll (MIH) nach Standard 802.21 von dem mindestens einen Endgerät (5) an das Kernnetzwerk übertragen werden.

10. Verfahren zur dynamischen Aktualisierung von Nachbarzellenlisten (13) in heterogenen Netzwerken nach einem der vorstehenden Ansprüche, wobei die Analyse der empfangenen Funksignalqualitätsmessungen und die Aktualisierung der Nachbarzellenliste in einem Zugangsnetzwerkentdeckungs- und -auswählfunktions-Server (ANDSF) gemäß dem Partnerschaftsprojekt der dritten Generation (3GPP) erfolgen.

11. Endgerät (5) mit Mitteln für den Anschluss an verschiedene Typen von Anknüpfungspunkten eines heterogenen Netzwerks, **dadurch gekennzeichnet, dass** es ebenfalls Mittel umfasst zum:
- Empfangen einer Nachbarzellenliste (13) mit Kennungen von benachbarten Anknüpfungspunktkandidaten, dem entsprechenden Frequenzkanal und der entsprechenden voraussichtlichen Funksignalqualität,
- Scannen der Umgebung zum Messen der von den benachbarten Anknüpfungspunkten des heterogenen Netzwerks bereitgestellten Funksignalqualität, wobei das besagte Scannen vorrangig entlang den den Anknüpfungspunkten der Nachbarzellenliste (13) entsprechenden Kanälen durchgeführt wird,
- Vergleichen der gemessenen Funksignalqualität der benachbarten Anknüpfungspunkte mit den Daten der Nachbarzellenliste (13),
- Übertragen mindestens einer Funksignalqualitätsmessung, der Kennung ihres entsprechenden benachbarten Anknüpfungspunktes und ihres entsprechenden Frequenzkanals an das Kernnetzwerk, wenn mindestens eine Funksignalqualitätsmessung von der voraussichtlichen Funksignalqualität der Nachbarzellenliste (13) abweicht und mindestens einer vorbestimmten Bedingung entspricht.

## Revendications

1. Procédé de mise à jour dynamique de listes de cellules voisines (13) dans des réseaux hétérogènes, **caractérisé en ce que** ledit procédé comprend les étapes suivantes :
- transmission (102) à au moins un terminal (5) d'une liste de cellules voisines (13) comprenant des identifiants de points de rattachement voisins candidats, les canaux de fréquence correspondants et les qualités du signal hertzien attendues correspondantes, à la cellule à laquelle ledit au moins un terminal est connecté,
si un processus de transfert est requis pour ledit au moins un terminal (5),
- balayage (103) de l'environnement dudit terminal (5) pour mesurer la qualité du signal hertzien fourni par les points de rattachement voisins du réseau hétérogène, ledit balayage étant réalisé en priorité parmi les canaux correspondant aux points de rattachement de la liste de cellules voisines (13),
- comparaison (104) de la qualité du signal hertzien mesurée des points de rattachement voisins avec les données de la liste de cellules voisines (13),
si au moins une mesure de la qualité du signal hertzien est différente de la qualité du signal hertzien attendue de la liste de cellules voisines (13) et coïncide avec au moins une condition prédéterminée,
- transmission (105) de ladite au moins une mesure de la qualité du signal hertzien, de son identifiant de point de rattachement voisin correspondant et de son canal de fréquence correspondant au réseau central,
- analyse (106) statistique de l'au moins une mesure de la qualité du signal hertzien reçue et des mesures disponibles précédemment correspondant à la cellule à laquelle est connecté ledit au moins un terminal (5),
- mise à jour (107) de la liste de cellules voisines (13) en se basant sur ladite analyse.

2. Procédé de mise à jour dynamique de listes de cellules voisines dans des réseaux hétérogènes selon la revendication 1, selon lequel l'étape d'analyse (106) statistique de l'au moins une mesure de la qualité du signal hertzien reçue et des mesures disponibles précédemment correspondant à la cellule à laquelle est connecté ledit au moins un terminal comprend les étapes suivantes :
- application d'un filtre d'harmonisation à ladite au moins une mesure de la qualité du signal hertzien et aux mesures de la qualité du signal hertzien précédentes en fonction de leur type afin d'obtenir une base de comparaison entre les différentes mesures de la qualité du signal hertzien existant dans le réseau hétérogène,
- sélection des points de rattachement à inclure dans la liste en fonction de critères prédéterminés.

3. Procédé de mise à jour dynamique de listes de cellules voisines (13) dans des réseaux hétérogènes selon la revendication 2, selon lequel lesdits critères prédéterminés se réfèrent à au moins un ou à une combinaison des critères suivants :
- un niveau de qualité de signal,
- un nombre de mesures,
- une couverture de cellule,
- une caractéristique de débit de données,
- une limite de taille de la liste,
- un critère technique,
- un critère administratif.

4. Procédé de mise à jour dynamique de listes de cellules voisines (13) dans des réseaux hétérogènes selon la revendication 3, selon lequel le critère technique se réfère à un opérateur ou à une politique d'utilisateur de sorte que les points de rattachement peuvent être préférés en se basant sur leur technologie.

5. Procédé de mise à jour dynamique de listes de cellules voisines (13) dans des réseaux hétérogènes selon la revendication 4, selon lequel le critère administratif se réfère à un opérateur ou à une politique d'utilisateur de sorte que les points de rattachement peuvent être préférés en se basant sur leur opérateur.

6. Procédé de mise à jour dynamique de listes de cellules voisines (13) dans des réseaux hétérogènes selon l'une des revendications précédentes, selon lequel lesdites mesures disponibles précédemment comprennent les mesures envoyées par les terminaux et les données de transfert collectées par les points de rattachement.

7. Procédé de mise à jour dynamique de listes de cellules voisines (13) dans des réseaux hétérogènes selon l'une des revendications précédentes, selon lequel ladite condition prédéterminée se réfère au niveau de qualité de signal hertzien mesuré par rapport à un seuil de qualité du signal prédéterminé.

8. Procédé de mise à jour dynamique de listes de cellules voisines (13) dans des réseaux hétérogènes selon l'une des revendications précédentes, selon lequel ladite condition prédéterminée se réfère à une condition relative à la différence entre le niveau de qualité de signal hertzien mesuré et le niveau de qualité de signal hertzien correspondant de la liste.

9. Procédé de mise à jour dynamique de listes de cellules voisines (13) dans des réseaux hétérogènes selon l'une des revendications précédentes, selon lequel lesdites mesures de la qualité du signal hertzien sont transmises de l'au moins un terminal (5) au réseau central conformément à un protocole de transfert indépendant de média MIH 802.21.

10. Procédé de mise à jour dynamique de listes de cellules voisines (13) dans des réseaux hétérogènes selon l'une des revendications précédentes, selon lequel l'analyse des mesures de la qualité du signal hertzien reçues et la mise à jour de la liste des cellules voisines sont réalisées dans un serveur de fonction de découverte et de sélection du réseau d'accès (ANDSF) conformément au projet de partenariat de 3e génération (3GPP).

11. Terminal (5) comprenant des moyens pour se connecter à différents types de points de rattachement d'un réseau hétérogène, **caractérisé en ce qu'**il comprend également des moyens pour :
- recevoir une liste de cellules voisines (13) comprenant des identifiants de points de rattachement voisins candidats, le canal de fréquence correspondant et la qualité du signal hertzien attendue correspondante,
- balayer l'environnement pour mesurer la qualité du signal hertzien fourni par les points de rattachement voisins du réseau hétérogène, ledit balayage étant réalisé en priorité parmi les canaux correspondant aux points de rattachement de la liste de cellules voisines (13),
- comparer la qualité du signal hertzien mesuré des points de rattachement voisins avec les données de la liste de cellules voisines (13),
- transmettre ladite au moins une mesure de la qualité du signal hertzien, de son identifiant de point de rattachement voisin correspondant et de son canal de fréquence correspondant au réseau central, dans le cas où au moins une mesure de la qualité du signal hertzien est différente de la qualité du signal hertzien attendue de la liste de cellules voisines (13) et coïncide avec au moins une condition prédéterminée.
